# EUROPEAN PATENT APPLICATION

(11) **EP 1 657 926 A2**
(43) Date of publication of application: **17.05.2006**
(21) Application number: 05109460.5
(22) Date of filing: 12.10.2005
(51) Int. Cl.: H04N 7/167, H04N 7/16, H04N 5/00

(54) **Information processing apparatus**

(30) Priority: 10.11.2004 JP 2004326833
(71) Applicant: KABUSHIKI KAISHA TOSHIBA, Tokyo 105-8001 (JP)
(72) Inventor: Tomiyasu, Yuuichi, 105-8001, Tokyo (JP)
(74) Representative: Henkel, Feiler & Hänzel

(57) **Abstract**

A digital TV broadcasting reception processing unit (116) including a digital TV tuner (201) and an OFDM demodulator (202) receives a digital broadcasting program of the terrestrial digital TV broadcasting. An analog TV broadcasting reception processing unit (117) including an analog TV tuner (301) and an MPEG 2 encoder (302) receives an analog broadcasting program of the terrestrial analog TV broadcasting. When broadcasting program data is input from the digital TV broadcasting reception processing unit (116), an encryption device (118) decrypts and re-encrypts the broadcasting program data using a first system to output thus decrypted and re-encrypted data to a PCI bus, and when broadcasting program data is input from the analog TV broadcasting reception processing unit (117), the encryption device (118) decrypts and re-encrypts the broadcasting program data using a second system to output thus decrypted and re-encrypted data to the PCI bus.

## Description

The present invention relates to an encryption technique that is desirably applied to a personal computer etc. having the television function of receiving and presenting television broadcasting.

In recent years, since the environment for data communication has been developed, and the compression-encoding technology and image processing technology for moving picture data has been improved, personal computers having the television function of receiving and presenting television broadcasting are coming to be manufactured and sold. Furthermore, lately, since the digital broadcasting for transmitting television broadcasting data using digital signals is coming into wide use, there are suggested various encryption methods employed inside apparatuses for receiving television broadcasting data so as to prevent unauthorized copying (for example, refer to Jpn. Pat. Appln. KOKAI Publication No. 2001-45432).

When carrying out the encryption processing disclosed in Publication No. 2001-45432, television broadcasting data is sent to a bus with its content kept secret, which can surely protect the copyright or the like.

At present, there are parallelly established two types of television broadcasting or high definition (HD) broadcasting using digital signals and standard definition (SD) broadcasting using analog signals, and there are strong demands of receiving and watching both types of the broadcasting from users. In the HD broadcasting using digital signals, television broadcasting data is transmitted in the form of a transport stream (TS), while in the SD broadcasting using analog signals, television broadcasting data is transmitted in the form of a program stream (PS).

So as to meet the demands, it is necessary to arrange tuners which can receive both types of television broadcasting data in a personal computer respectively. In case the encryption processing is employed in the SD broadcasting in addition to the HD broadcasting, it is desired that encryption devices (for decryption and re-encryption) corresponding to both types of broadcasting be arranged respectively, in view of the protection of copyright or the like.

However, when two encryption devices or an encryption device for the HD broadcasting and an encryption device for the SD broadcasting are arranged, the cost is undesirably increased, and there is raised a problem that notebook-sized personal computers, etc., are prevented from being further reduced in size and weight.

It is therefore an object of the present invention to overcome the above-mentioned drawbacks by providing an information processing apparatus that can encrypt both types of television broadcasting data, that is, television broadcasting data of the HD broadcasting transmitted in the form of a transport stream (TS) and television broadcasting data of the SD broadcasting transmitted in the form of a program stream (PS) at low cost.

In order to achieve the above-described object, an information processing apparatus characterized by comprising: a first tuner for receiving first television broadcasting data that is encrypted and of first data configuration; a second tuner for receiving second television broadcasting data that is encrypted and of second data configuration; a bus for transferring various data; and an encryption device (118) for decrypting and re-encrypting the first television broadcasting data received by the first tuner using a first system to output thus decrypted and re-encrypted data to the bus, and for decrypting and re-encrypting the second television broadcasting data received by the second tuner using a second system to output thus decrypted and re-encrypted data to the bus.

According to the present invention, it becomes possible to provide an information processing apparatus that can encrypt both types of television broadcasting data, or television broadcasting data of the HD broadcasting transmitted in the form of a transport stream (TS) and television broadcasting data of the SD broadcasting transmitted in the form of a program stream (PS) at low cost.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows a perspective view of a computer according to an embodiment of the present invention;
FIG. 2 shows a block diagram indicative of the system configuration of the computer shown in FIG. 1;
FIG. 3 shows a block diagram indicative of the configuration of an encryption device of the computer shown in FIG. 1;
FIGS. 4A and 4B show diagrams indicative of the state in which both digital TV broadcasting and analog TV broadcasting are concurrently displayed in the computer shown in FIG. 1;
FIG. 5 shows a flowchart indicative of performance procedure of the encryption processing by the encryption device of the computer shown in FIG. 1; and
FIG. 6 shows a flowchart in case both a transport stream and a program stream are parallelly encrypted in the computer shown in FIG. 1.

An embodiment of the present invention will be described below with reference to the accompanying drawings.

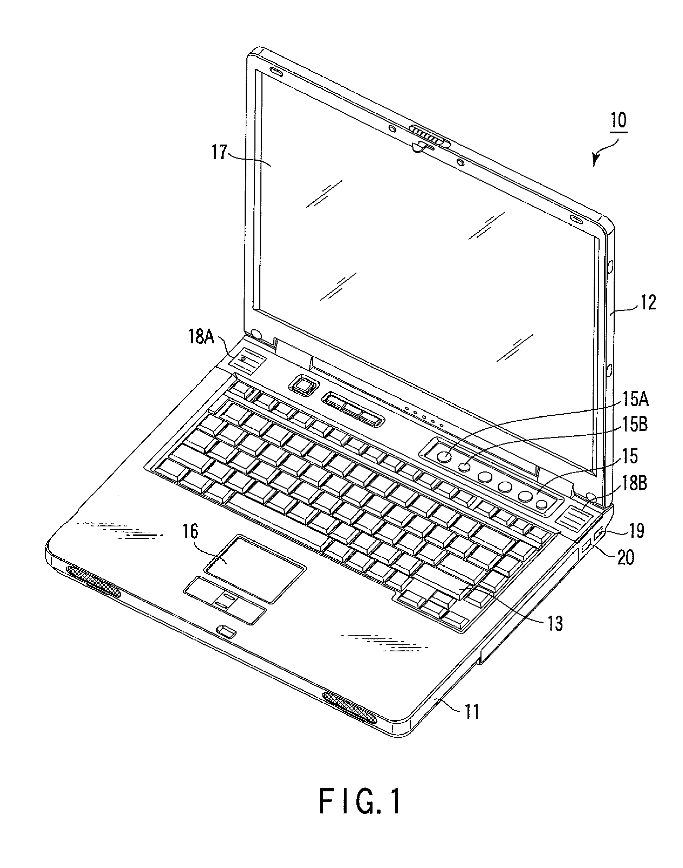

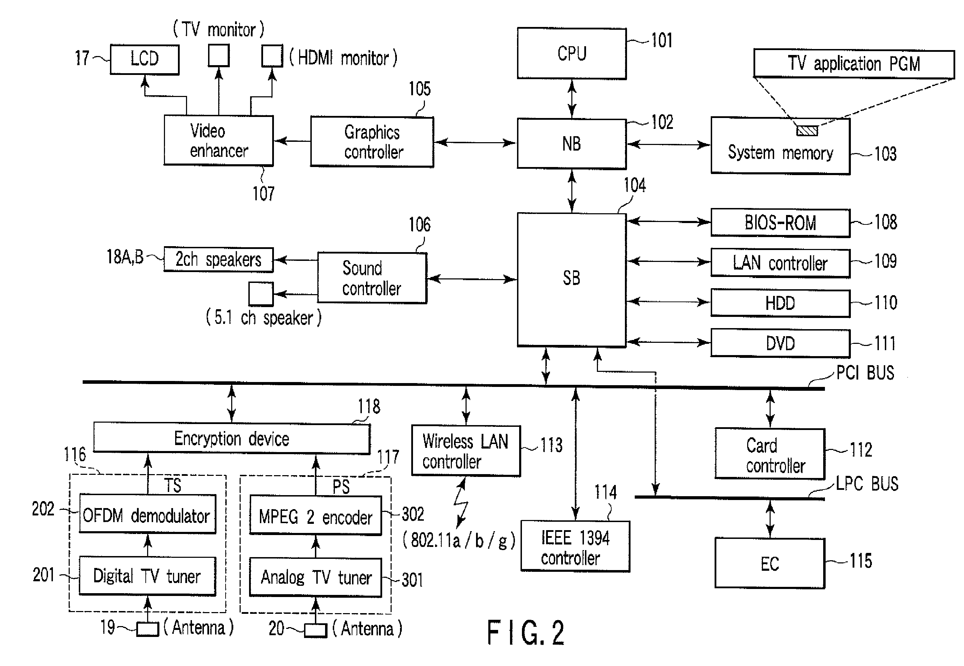

Firstly, referring to FIG. 1 and FIG. 2, the configuration of an apparatus for processing information according to an embodiment of the present invention will be explained. This information processing apparatus is realized as a notebook-sized personal computer 10.

FIG. 1 shows a perspective view of the notebook-sized personal computer 10 with its display unit made opened. The computer 10 includes a computer main body 11, and a display unit 12. The display unit 12 has built therein a display device configured by a thin-film transistor liquid crystal display (TFT-LCD) 17, and a display screen of the LCD 17 is located at substantially the center of the display unit 12.

The display unit 12 is pivotably attached to the computer main body 11 between the open position and close position. The computer main body 11 includes a housing in the shape of thin box, on which a keyboard 13, a power button 14 for turning on or off the power of the computer 10, an input operation panel 15, a touch pad 16, and speakers 18A, 18B are arranged.

The input operation panel 15 is an input device for inputting events which correspond to pressed buttons, and has plural buttons for booting up plural functions respectively. These buttons include a TV boot-up button 15A and a DVD/CD boot-up button 15B. The TV boot-up button 15A is a button for booting up the TV function of reproducing and recording TV broadcasting program data, and a TV application program for executing the TV function is booted up when the TV boot-up button 15A is pressed by the user.

The computer 10 has installed therein a dedicated sub operating system for processing audio and video (AV) data in addition to a general-purpose main operating system. The TV application program is a program that is made to operate on the sub operating system.

When the power button 14 is pressed by the user, the main operating system is booted up. On the other hand, when the TV boot-up button 15A is pressed by the user, not the main operating system but the sub operating system is booted up, and the TV application program is automatically executed. The sub operating system is provided with a minimum function alone for executing the AV function. Accordingly, time period required for booting up the sub operating system is significantly short as compared with that required for booting up the main operating system. Thus, the user can watch or record a TV program immediately by only pressing the TV boot-up button 15A.

The computer 10 can receive and reproduce both the terrestrial digital TV broadcasting and terrestrial analog TV broadcasting. The computer main body 11 has arranged on the right side surface thereof an antenna terminal 19 for the terrestrial digital TV broadcasting and an antenna terminal 20 for the terrestrial analog TV broadcasting.

The DVD/CD boot-up button 15B is a button for reproducing video content recorded in a DVD or CD. When the DVD/CD boot-up button 15B is pressed by the user, a video reproduction application program for reproducing video content is booted up. The video reproduction application program is an application program that is also made to operate on the sub operating system. When the DVD/CD boot-up button 15B is pressed by the user, not the main operating system but the sub operating system is booted up, and the video reproduction application program is automatically executed.

Next, referring to FIG. 2, the system configuration of the computer 10 will be explained.

The computer 10 includes a CPU 101, a north bridge (NB) 102, a system memory 103, a south bridge (SB) 104, a graphics controller 105, a sound controller 106, a video enhancer 107, a BIOS-ROM 108, a LAN controller 109, a hard disc drive (HDD) 110, a DVD drive (DVDD) 111, a card controller 112, a wireless LAN controller 113, an IEEE 1394 controller 114, an embedded controller (EC) 115, a digital TV broadcasting reception processing unit 116, an analog TV broadcasting reception processing unit 117, and an encryption device 118, as shown in FIG. 2.

The CPU 101 is a processor that controls the performance of the computer 10, and executes various application programs such as the main operating system, sub operating system, and TV application program which are loaded to the system memory 103 from the HDD 110. Furthermore, the CPU 101 also executes the system basic input output System (BIOS) stored in the BIOS-ROM 108. The system BIOS is a program for controlling hardware.

The NB 102 is a bridge device that connects a local bus of the CPU 101 and the SB 104. The NB 102 has built therein a memory controller for access-controlling the system memory 103. Furthermore, the NB 102 is also provided with a function of communicating with the graphics controller 105 through an accelerated graphics port (AGP) bus, a serial bus of the PCI express standard, etc.

The graphics controller 105 is a display controller for controlling the LCD 17 that is used as a display monitor of the computer 10. Video data generated by the graphics controller 105 is sent to the video enhancer 107 to undergo video processing (image quality adjustment processing), thereby making image quality of the video data high. Video data whose image quality is made high by the video enhancer 107 is sent to the LCD 17. Video data whose image quality is made high by the video enhancer 107 can be transmitted to an external TV monitor or HDMI monitor through a connecter arranged in the computer main body 11.

The SB 104 controls respective devices on a low pin count (LPC) bus and respective devices on a peripheral component interconnect (PCI) bus. Furthermore, the SB 104 has built therein an integrated drive electronics (IDE) controller for controlling the HDD 110 and DVDD 111. Moreover, the SB 104 is provided with a function of communicating with the sound controller 106.

The sound controller 106 is a sound source device that sends audio data to be reproduced to the speakers 18A, 18B, or to an external 5.1 channel speaker system connected thereto through a connector.

The card controller 112 controls cards such as a PC card, a secure digital (SD) card, etc. The wireless LAN controller 113 is a wireless communication device that performs wireless communication of, for example, the IEEE 802.11 standard. The IEEE 1394 controller 114 communicates with an external device through a serial bus of the IEEE 1394 standard. The EC 115 is a one-chip microcomputer that has integrated therein an embedded controller for managing electric power and a keyboard controller for controlling the keyboard 13 and touch pad 16. The EC 115 is provided with a function of turning on or off the power of the computer 10 in answer to the operation of the power button 14 by the user. Furthermore, the EC 115 can turn on the power of the computer 10 in answer to the operation of the TV boot-up button 15A and DVD/CD boot-up button 15B by the user.

The digital TV broadcasting reception processing unit 116 is a device that receives a digital broadcasting program of the terrestrial digital TV broadcasting, and is connected to the antenna terminal 19. The digital TV broadcasting reception processing unit 116 includes a digital TV tuner 201 and an orthogonal frequency division multiplexing (OFDM) demodulator 202, as shown in FIG. 2. The digital TV tuner 201 and OFDM demodulator 202 work as a tuner module that receives broadcasting program data of the terrestrial digital TV broadcasting. In the terrestrial digital TV broadcasting, the MPEG 2 is employed as a compression-encoding system for respective broadcasting program data (video, audio). Furthermore, as video format, the high definition (HD) of high resolution is employed.

The digital TV broadcasting reception processing unit 116 configured by the digital TV tuner 201 and OFDM demodulator 202 receives a TV broadcasting signal of a specified channel from among TV broadcasting signals input through the antenna terminal 19, and takes out a transport stream (TS) from thus received TV broadcasting signal. The transport stream is a stream that is generated by multiplexing compression-encoded broadcasting content. In the terrestrial digital TV broadcasting, plural programs are multiplexed for each channel (physical channel). The transport stream is configured by packets of 192 bytes.

On the other hand, the analog TV broadcasting reception processing unit 117 is a device that receives an analog broadcasting program of the terrestrial analog TV broadcasting, and is connected to the antenna terminal 20. The analog TV broadcasting reception processing unit 117 includes an analog TV tuner 301 and an MPEG 2 encoder 302, as shown in FIG. 2. The analog TV tuner 301 is a tuner module that receives analog broadcasting program data, and receives a TV broadcasting signal of a specified channel from among TV broadcasting signals input through the antenna terminal 20. The broadcasting program data received by the analog TV tuner 301 is sent to the MPEG 2 encoder 302. The MPEG 2 encoder 302 compression-encodes the broadcasting program data by employing an encoding system of the MPEG 2 standard, and generates a program stream (PS) in which compression-encoded video data and compression-encoded audio data are multiplexed. The program stream is configured by packets of 4 Kbytes which are larger than those of a transport stream.

After decrypting a transport stream input through the digital TV broadcasting reception processing unit 116, the encryption device 118 re-encrypts the transport stream using an encryption key shared with the TV application program, and transfers thus re-encrypted transport stream to the system memory 103 through the PCI bus. This decryption processing is carried out by generating an encryption key using a previously given device key (that is device identification information configured by an identifier of the kind of machine or manufacturer) and predetermined information within the transport stream. Then, even though the broadcasting program data is illegally taken out through the PCI bus due to this re-encryption, thus taken out broadcasting program data is prevented from being reproduced. Furthermore, after decrypting a program stream input through the analog TV broadcasting reception processing unit 117 using a device key and predetermined information within the program stream, the encryption device 118 re-encrypts the program stream using an encryption key shared with the TV application program, and transfers thus re-encrypted program stream to the system memory 103 through the PCI bus. Thus re-encrypted transport stream and program stream are decrypted by the TV application program sharing the encryption key in the software manner.

That is, the computer 10 decrypts and re-encrypts digital TV broadcasting data, and decrypts and re-encrypts analog TV broadcasting data using the single encryption device 118. Accordingly, since the encryption device 118 is shared, cost reduction is realized (as compared with the case of arranging an encryption device for digital TV broadcasting and an encryption device for analog TV broadcasting respectively).

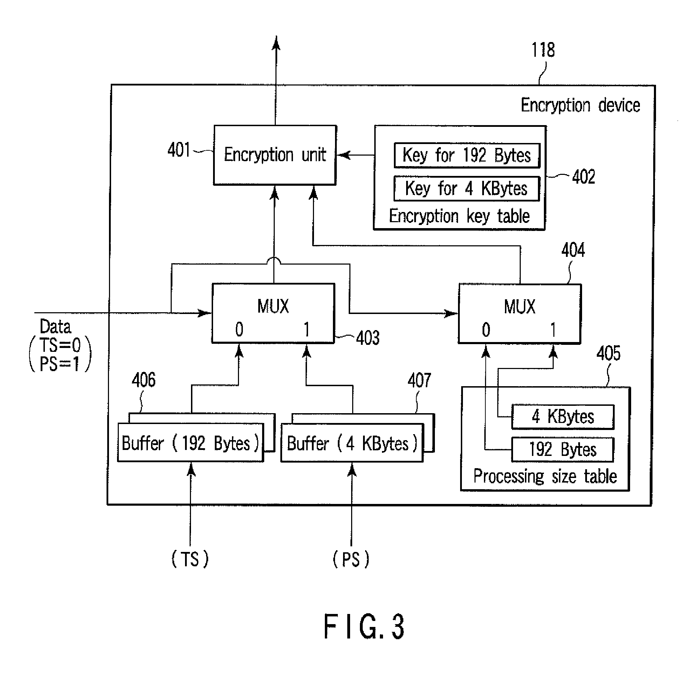

FIG. 3 shows a block diagram indicative of the configuration of the encryption device 118 of the computer 10. The encryption device 118 includes an encryption unit 401, an encryption key table 402, multiplexers 403 and 404, a processing size table 405, a buffer 406 for a transport stream, and a buffer 407 for a program stream, as shown in FIG. 3.

To the encryption device 118, a transport stream and a program stream are always supplied from the digital TV broadcasting reception processing unit 116 and analog TV broadcasting reception processing unit 117, and thus supplied transport stream and program stream are accumulated in the buffer 406 of 192 bytes two stages and in the buffer 407 of 4 Kbytes two stages in the circulating manner. The buffer 406 and buffer 407 are connected to the multiplexer 403, and data stored in the buffer 406 or buffer 407 is supplied to the encryption unit 401 exclusively and selectively based on the value of a control signal sent from the TV application program. The control signal is also sent to the multiplexer 404. As a result, instruction of which of the 192 byte processing size or 4 Kbytes processing size stored in the processing size table 405 should be employed for the re-encryption processing is sent to the encryption unit 401.

Specifically, when watching digital TV broadcasting, since a control signal "0" is sent from the TV application program, a transport stream is supplied to the encryption unit 401 through the multiplexer 403, and instruction of 192 bytes as a unit for encrypting the transport stream is sent to the encryption unit 401 through the multiplexer 404. For ease of explanation, the processing of decrypting the transport stream by the encryption unit 401 is not considered here. On the other hand, when watching analog TV broadcasting, since a control signal "1" is sent from the TV application program, a program stream is supplied to the encryption unit 401 through the multiplexer 403, and instruction of 4 Kbytes as a unit for encrypting the program stream is sent to the encryption unit 401 through the multiplexer 404.

In this way, the encryption device 118 encrypts the transport stream and encrypts the program stream with a processing unit suitable for the respective processing depending on the control signal sent from the TV application program. That is, the encryption mechanism is shared.

Furthermore, the encryption unit 401 switches an encryption key to be used for the encryption processing depending on the processing size sent from the processing size table 405 through the multiplexer 404. A great number of encryption keys for 192 bytes as well as a great number of encryption keys for 4 Kbytes are stored in the encryption key table 402 in advance, and the encryption unit 401 uses these encryption keys of different sizes in predetermined order. Switching an encryption key to be used depending on the size of encryption, that is, depending on whether the transport stream or program stream, even though one encryption is violated, the violation is prevented from acting on the other encryption, which can minimize the damage.

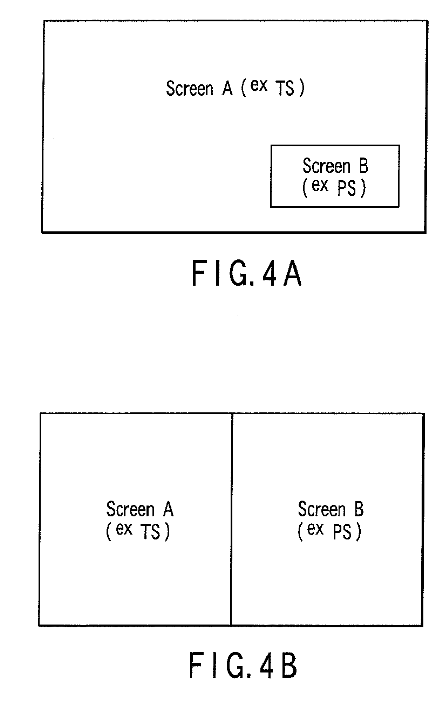

In above-described explanation, it is assumed that either digital TV broadcasting or analog TV broadcasting is exclusively and selectively watched.
On the other hand, recently, a function of displaying a plurality of images is often utilized, as shown in FIG. 4A and FIG. 4B. The case shown in FIG. 4A is referred to as picture in picture, in which a sub screen is arranged on a part of a main screen, while the case shown in FIG. 4B is referred to as side by side, in which two screens are arranged adjacently.

That is, in case of being provided with the function, since it becomes possible to receive and watch digital TV broadcasting and analog TV broadcasting concurrently, the encryption device 118 is required to encrypt the transport stream and encrypt the program stream concurrently and alongside apparently.

In this case, the computer 10 gives priority to the encryption processing with a smaller processing unit, specifically, gives priority not to the processing of encrypting the program stream with a processing unit of 4 Kbytes but to the processing of encrypting the transport stream with a processing unit of 192 bytes. By giving priority to the encryption processing with a smaller processing unit, it is required that requisite minimum buffer capacity is arranged, which can prevent needless cost increase. This priority control may be performed under the TV application program, or the encryption device 118 performs the priority control individually.

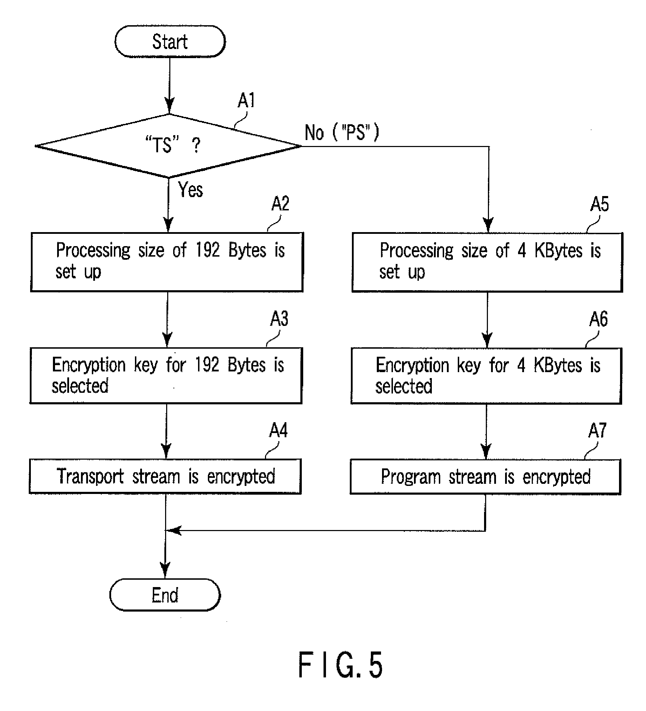

FIG. 5 shows a flowchart indicative of performance procedure of the encryption processing by the encryption device 118 of the computer 10.

In case of encrypting a transport stream (step A1, Yes), the processing size of 192 bytes is set up (step A2), and an encryption key for 192 bytes is selected (step A3). Then, the transport stream is encrypted under thus set up processing size using thus selected encryption key (step A4).

On the other hand, in case of encrypting a program stream (step A1, No), the processing size of 4 Kbytes is set up (step A5), and an encryption key for 4 Kbytes is selected (step A6). Then, the program stream is encrypted under thus set up processing size using thus selected encryption key (step A7).

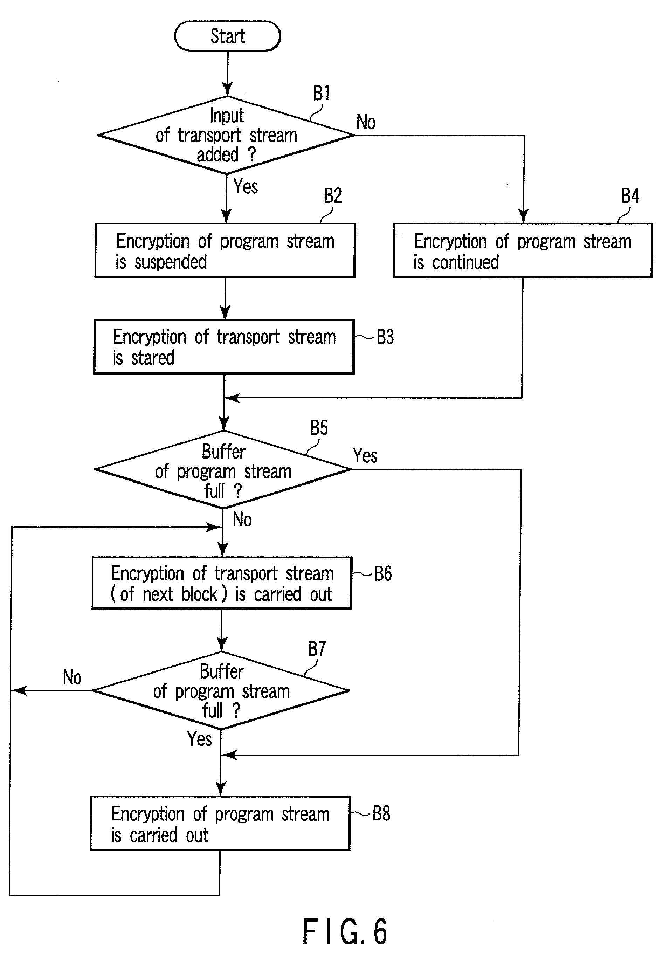

FIG. 6 shows a flowchart in case both a transport stream and a program stream are parallelly encrypted.

In case of encrypting a transport stream and a program stream in parallel, it is inspected whether or not an added input is a transport stream (step B1). In case the added input is a transport stream (step B1, Yes), the processing of encrypting a program stream, which has been performed up to that time, is suspended (step B2), and the processing of encrypting a transport stream is stared (step B3). On the other hand, in case the added input is a program stream (step B1, No), the processing of encrypting a program stream, which has been performed up to that time, is continued (step B4).

When the processing of encrypting a transport stream is ended, it is inspected whether or not the buffer of a program stream comes to the full state (step B5), and in case the buffer of a program stream does not come to the full state (step B5, No), the processing of encrypting a transport stream is continued to be carried out (step B6). Hereafter, while the buffer of a program stream does not come to the full state (step B7, No), priority is given to the processing of encrypting a transport stream (step B6), and every time the buffer of a program stream comes to the full state (step B7, Yes), the processing of encrypting a program stream is carried out (step B8).

In this way, the computer 10 encrypts a transport stream and encrypts a program stream using the single encryption device 118, which can realize cost reduction.

In the above-described embodiment, priority is given not to the processing of encrypting a program stream of large data size but to the processing of encrypting a transport stream of small data size. On the other hand, instead of the data size, priority may be given not to the processing of encrypting broadcasting program data of low resolution but to the processing of encrypting broadcasting program data of high resolution.

## Claims

1. An information processing apparatus
**characterized by** comprising:
a first tuner (201) for receiving first television broadcasting data that is encrypted and of first data configuration;
a second tuner (301) for receiving second television broadcasting data that is encrypted and of second data configuration;
a bus for transferring various data; and
an encryption device (118) for decrypting and re-encrypting the first television broadcasting data received by the first tuner using a first system to output thus decrypted and re-encrypted data to the bus, and for decrypting and re-encrypting the second television broadcasting data received by the second tuner using a second system to output thus decrypted and re-encrypted data to the bus.

2. The apparatus according to claim 1,
**characterized in that** the first data configuration is a transport stream (TS), and the second data configuration is a program stream (PS).

3. The apparatus according to claim 1,
**characterized in that** the encryption device switches a processing unit between the processing of encrypting the first television broadcasting data using the first system and the processing of encrypting the second television broadcasting data using the second system.

4. The apparatus according to claim 1,
**characterized in that** the encryption device switches an encryption key between the processing of decrypting and re-encrypting the first television broadcasting data using the first system and the processing of decrypting and re-encrypting the second television broadcasting data using the second system.

5. The apparatus according to claim 1,
**characterized in that** the encryption device encrypts the first television broadcasting data using the first system with a shorter processing unit as compared with the case of encrypting the second television broadcasting data using the second system, and gives priority not to the processing of encrypting the second television broadcasting data but to the processing of encrypting the first television broadcasting data with a shorter processing unit in the case of parallel encryption of both the first television broadcasting data received by the first tuner and the second television broadcasting data received by the second tuner.

6. The apparatus according to claim 5,
**characterized in that** the encryption device suspends the processing of encrypting the second television broadcasting data and carries out the processing of encrypting the first television broadcasting data.

7. The apparatus according to claim 1,
**characterized in that**
the first television broadcasting data has a resolution that is higher than that of the second television broadcasting data, and
the encryption device gives priority not to the processing of encrypting the second television broadcasting data but to the processing of encrypting the first television broadcasting data having a higher resolution, in the case of parallel encryption of both the first television broadcasting data received by the first tuner and the second television broadcasting data received by the second tuner.

8. The apparatus according to claim 7,
**characterized in that** the encryption device suspends the processing of encrypting the second television broadcasting data and carries out the processing of encrypting the first television broadcasting data.

9. An information processing apparatus
**characterized by** comprising:
a high definition (HD) broadcasting reception tuner (201) for receiving HD broadcasting data that is encrypted;
an standard definition (SD) broadcasting reception tuner (301) for receiving SD broadcasting data that is encrypted;
a bus for transferring various data; and
an encryption device (118) for decrypting and re-encrypting television broadcasting data received by the HD broadcasting reception tuner using a first system to output thus decrypted and re-encrypted data to the bus, and for decrypting and re-encrypting television broadcasting data received by the SD broadcasting reception tuner using a second system to output thus decrypted and re-encrypted data to the bus.

10. The apparatus according to claim 9,
**characterized in that** the encryption device switches a processing unit between the processing of encrypting the television broadcasting data received by the HD broadcasting reception tuner using the first system and the processing of encrypting the television broadcasting data received by the SD broadcasting reception tuner using the second system.

11. The apparatus according to claim 10,
**characterized in that** the encryption device gives priority not to the processing of encrypting the television broadcasting data received by the SD broadcasting reception tuner but to the processing of encrypting the television broadcasting data received by the HD broadcasting reception tuner, in the case of parallel encryption of both the television broadcasting data received by the HD broadcasting reception tuner and the television broadcasting data received by the SD broadcasting reception tuner.

12. The apparatus according to claim 11,
**characterized in that** the encryption device suspends the processing of encrypting the television broadcasting data received by the SD broadcasting reception tuner and carries out the processing of encrypting the television broadcasting data received by the HD broadcasting reception tuner.
